(19) Europäisches Patentamt
European Patent Office
Office européen des brevets

(11) **EP 4 243 273 B1**

(12) **EUROPEAN PATENT SPECIFICATION**

(45) Date of publication and mention
of the grant of the patent:
**16.04.2025 Bulletin 2025/16**

(21) Application number: **22461520.3**

(22) Date of filing: **08.03.2022**

(51) International Patent Classification (IPC):
***H02N 2/18*** *(2006.01)*

(52) Cooperative Patent Classification (CPC):
**H02N 2/18**

(54) **AN ENERGY GENERATION MODULE AND A METHOD OF ENERGY HARVESTING USING FLUCTUATIONS OF PRESSURE**

ENERGIEERZEUGUNGSMODUL UND VERFAHREN ZUR ENERGIEGEWINNUNG UNTER VERWENDUNG VON DRUCKSCHWANKUNGEN

MODULE DE PRODUCTION D'ÉNERGIE ET PROCÉDÉ DE RÉCUPÉRATION D'ÉNERGIE UTILISANT LES FLUCTUATIONS DE PRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.09.2023 Bulletin 2023/37**

(73) Proprietor: **Instytut Wysokich Cisnien Polskiej Akademii Nauk**
**01-142 Warszawa (PL)**

(72) Inventors:
• **SKOTNICKI, Tomasz**
**01-142 Warszawa (PL)**

• **HARAS, Maciej**
**01-142 Warszawa (PL)**
• **AHMED, Naveed**
**01-142 Warszawa (PL)**

(74) Representative: **AOMB Polska Sp. z.o.o.**
**ul. Rondo Ignacego Daszynskiego 1**
**00-843 Warsaw (PL)**

(56) References cited:
**EP-A1- 3 633 844**   **WO-A2-02/084754**
**DE-A1- 102010 019 740**   **US-A1- 2008 136 562**
**US-A1- 2017 366 107**

## Description

### Technical Field

The invention concerns an energy generation module and a method of energy harvesting using fluctuations of pressure.

### Background Art

Various micro-transducers incorporating piezoelectric materials for converting energy in one form to useful energy in another form are disclosed in WO2002084754. In one embodiment, a piezoelectric micro-transducer can be operated either as a micro-heat engine, converting thermal energy into electrical energy, or as a micro-heat pump, consuming electrical energy to transfer thermal energy from a low-temperature heat source to a high-temperature heat sink. In another embodiment, a piezoelectric micro-transducer is used to convert the kinetic energy of an oscillating or vibrating body on which the micro-transducer is placed into useful electrical energy. A piezoelectric micro-transducer also is used to extract work from a pressurized stream of fluid. Also disclosed are a microinternal combustion engine and a micro-heat engine based on the Rankine cycle in which a single fluid serves as a working fluid and fuel.

JP2009165931 discloses a manufacturing method of a capacitive ultrasonic transducer by which mechanical characteristics of a membrane and yield are enhanced, and increase in parasitic capacity is suppressed. The manufacturing method of the capacitive ultrasonic transducer comprises processes of: preparing an *S*ilicon *O*n *I*nsulator (*SOI*) substrate having an active layer on a support substrate via an insulation layer; forming a through-hole on the active layer or support substrate; forming a cavity by introducing fluid for etching the insulation layer from the through-hole formed on the active layer or support substrate and etching the insulation layer; forming an insulation film inside the cavity formed by etching the insulation layer; and sealing the through-hole after forming the insulation film inside the cavity.

Numerous, piezoelectric materials and constructions as well as suitable harvesting methods were disclosed in Safaei, M. et al. "A review of energy harvesting using piezoelectric materials: state-of-the-art a decade later (2008-2018)." Smart Materials and Structures 28 (2019): 113001. It is stressed that ambient energy can usually be found in the form of solar energy, thermal energy, electromagnetic waves, and vibration energy. Amongst these energy sources, vibration energy presents a persistent presence in nature and manmade structures. Various materials and transduction mechanisms have the ability to convert vibratory energy to useful electrical energy, such as piezoelectric, electromagnetic, and electrostatic generators. Recovering vibrational energy in piezoelectric transducer has been widely explored owing to their inherent simplicity, significant power densities and simple construction comparing with electrostatic and/or electromagnetic transducers.

Possibility of harvesting energy form atmospheric variations has been discussed in Gibran Ali, John Wagner, David Moline, Todd Schweisinger, Energy harvesting from atmospheric variations - Theory and test, Renewable Energy, Volume 74, 2015, Pages 528-535, ISSN 0960-1481, https://doi.org/10.1016/j.renene.2014.08.033. Approach was based on the daily temperature variations. A change of 23°C was assumed. Variations that high are not always available. Atmospheric pressure expresses certain daily variations which depend on the geographical region - Blancq, Frank. (2011). Diurnal pressure variation: The atmospheric tide, Weather, Volume 66. Pages 306-307, 2011, ISSN 1477-8696, https://doi.org/10.1002/wea.857.

Patent document US2008/0136562 A1, describes harvesting energy from pressure changes using electromagnetic means. Patent document EP3633844 A1 discloses a system for generating electric energy comprising a bellows system configured to expand or contract a bellows based on temperature changes and/or atmospheric pressure changes and a piezoelectric generator configured to generate electric energy by a piezoelectric element elastically deformable by forces of the expanding or contracting bellows.

### Summary of Invention

### Technical Problem

It has been observed that most commonly recognized kinds of ambient energy specifically energy of vibrations, solar energy or wind energy are not always and not everywhere available. Energy of daily pressure variations is a kind of energy that is universally available. Unfortunately, it is relatively low and difficult to harvest and to use. Energy generation module using this kind of energy needs to be suited for manufacturing in large number of items.

### Solution to Problem

Posed problem is solved with an energy generation module, comprising pressure transducer with at least one pressure-to-displacement converter having a cavity confined with a membrane susceptible to deformation under pressure difference between fluid inside and outside the cavity. At least piezoelectric element mechanically coupled with the at least one pressure-to-displacement converter for converting energy resulting from a move caused by deformation of membrane to electrical energy, which has electrical energy storage means connected to piezoelectric element. The cavity closed with the membrane is airtight and membrane is selected so that the pressure difference causing deformation corresponds to range of daily atmospheric pressure changes i.e. approximately 10 - 200 hPa over 6 - 24 hours. The module has plurality of spatially distributed piezoelectric elongated members engageable with at the least one pressure-to-displacement converter so that energy is released when pressure changes since previous energy release exceeds predetermined value. The module consists of energy storage elements which are coupled with at least one of the pressure-to-displacement converter. Stored energy is released when reaching predetermined value. Daily pressure change causes movement of the membrane which engages piezoelectric elongated members. During the day, as change of pressure goes on, the energy is gradually stored in the energy storage means. When pressure change exceeds certain value falling within a range (30 Pa, 80 Pa) energy storage means release energy and due to coupling with piezoelectric element mechanical energy is converted to electrical energy and stored. Use of plurality of piezoelectric elongated members enable re-engaging if pressure change is higher and further use of long-term changes.

Advantageously the cavity is realized in SOI technology. Application of this technology is convenient in a mass production.

Advantageously the membrane has a size of at least $10\mu m$ and advantageously its cavity is axially symmetrical. Small elements are less effective as they deliver less energy. However, they are easier to manufacture and less prone to damage. Membrane having diameter of 10 $\mu m$ and more were tested to be reasonable in terms of energy and still represent sufficient mechanical strength.

Advantageously the piezoelectric elongated members are adapted to store mechanical energy, while being bent by pressure-to-displacement converter and releasing it when being disengaged. Daily pressure changes are slow. It is difficult to convert them to electrical energy. Solution to this problem is storing the mechanical energy while bending the elongated members and then releasing the energy when resilient elongated members are disengaged and move in a manner fast enough to easily use piezoelectric effect. Additionally resilient elements tend to oscillate after disengaging and therefore produce more energy.

Advantageously plurality of spatially distributed piezoelectric elongated members comprises plurality of substantially parallel scuts of Lead zirconate titanate - PZT. This configuration proved to deliver high voltages.

Alternatively plurality of spatially distributed piezoelectric elongated members comprises a structure of Zinc Oxide- ZnO nanorods, which are convenient to use in mass production.

Advantageously plurality of spatially distributed piezoelectric elongated members comprises a silicon comb with ZnO layer.

Advantageously the energy generation module has a first electrode and a second electrode. The electrodes are parallel to each other. The plurality of spatially distributed piezoelectric elongated members comprise nano-rods forming a forest like structure encompassed between the first electrode and the second electrode. The first electrode is fixed and the second electrode is coupled with pressure-to-displacement converter for engaging nano-rods. Use of forest like structure trapped between electrodes allows applying the same displacement to a large number of piezoelectric elongated members simultaneously. All piezoelectric members are connected to the same electrodes and deform in the same way. Accordingly they discharge electrical energy at the same time and discharges combine constructively providing sufficient amount of electrical energy to be stored.

Advantageously the cavity is filed with a fluid with comprising a substance subjected to phase transition during operation of the module. Use of such substance allows generating more energy in the same conditions.

An energy generation module according to claim 9, wherein the substance is a substance selected from a group including chloroethane, acetone, isopropanol and ethanol or a mixture thereof.

Advantageously the electrical energy storage means comprise low leak capacitor. Use of such capacitor enables lightweight and durable electrical energy storage. The amount of energy to be stored is rather low and the time of harvesting rather long, this unusual circumstances make low leak capacitors advantageous.

An energy generation module advantageously comprises plurality pressure to displacement converter stacked one on another.

Pressure to displacement converters advantageously have cavities filed with fluid under different pressures.

A method of ambient energy harvesting comprising conversation of mechanical energy to electrical energy with piezoelectric element in which energy is harvested in a daily doses of atmospheric pressure variations with at least one module according to the invention.

## Advantageous Effects of Invention

Although energy delivered by the module according to the invention is not sufficient for may traditional applications it occurred that it is enough for numerous *I*nternet *o*f *T*hings (*IoT*) applications that require small doses of energy in peaks concentrated in narrow time slots as observed in Maciej Haras, Thomas Skotnicki, Thermoelectricity for IoT - A review, Nano Energy, Volume 54, Pages 461-476, 2018, , ISSN 2211-2855, https://doi.org/10.1016/j.nanoen.2018.10.013.

**Brief Description of Drawings**

**Fig.1a**

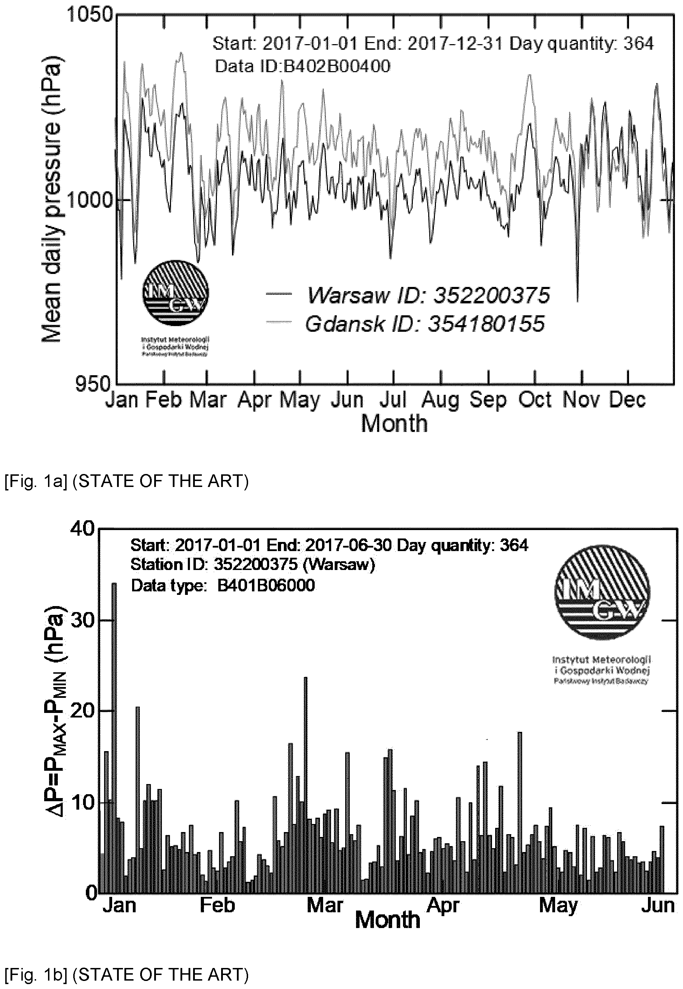

[Fig.1a] Shows mean value of daily pressure over an exemplary year in two cities spaced by c.a. 500 km: Warsaw and Gdansk.

**Fig.1b**
[Fig.1b] Shows difference between minimal pressure and maximal pressure calculated over the same data as mean values for Warsaw shown in Fig. 1a.

**Fig.2**

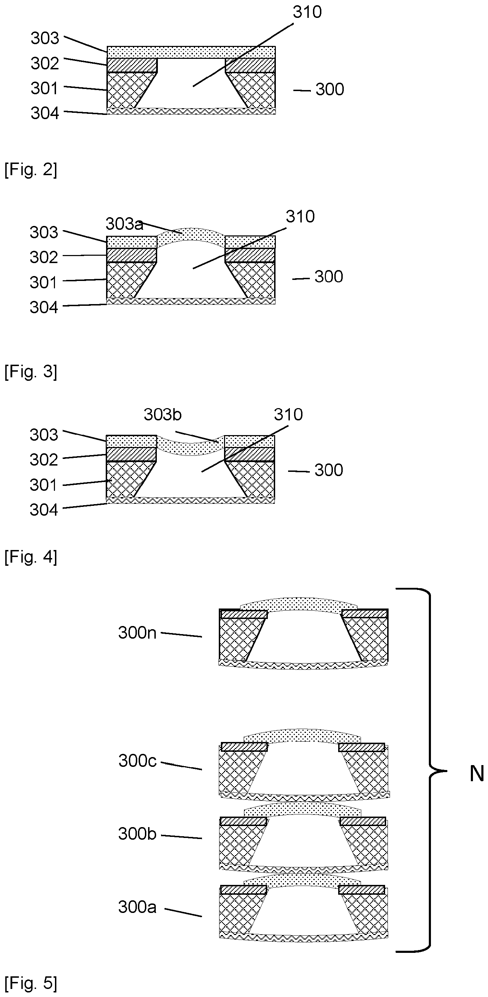

[Fig.2] Shows schematically cavity of the pressure-to-displacement converter when ambient pressure is lower than inner fluid pressure.

**Fig.3**
[Fig.3] Shows schematically cavity of the pressure-to-displacement converter when ambient pressure is higher than inner fluid pressure.

**Fig.3**
[Fig.4] Shows schematically pressure-to-displacement converter with plurality of cavities, stacked one on other in view of adding deflections and therefore maximize the amplitude of movements

**Fig.5**
[Fig.5] Shows schematically pressure-to-displacement converter with plurality of cavities, disengaging piezoelectric element provided on energy storage means releasing electrical energy - for illustration of principle of operation of embodiment of the invention.

**Fig.6a**

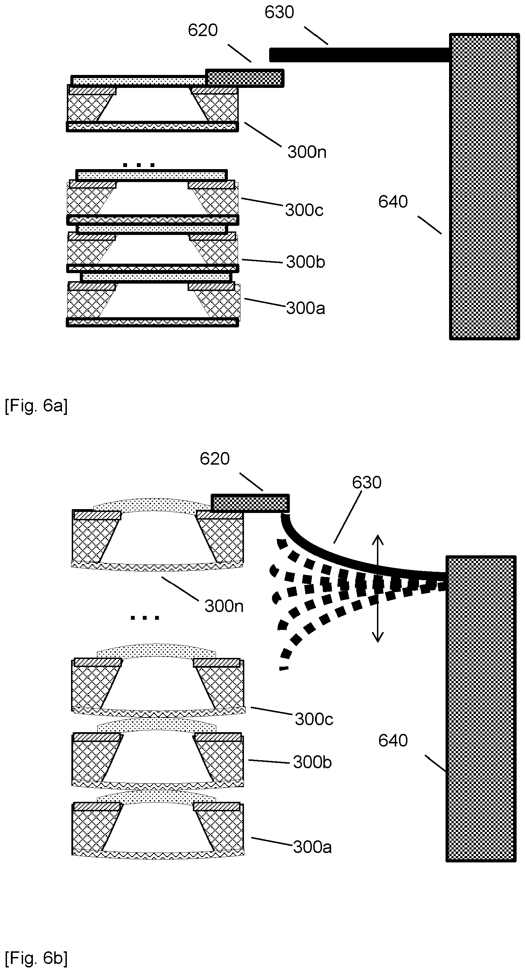

[Fig.6a] Shows schematically pressure-to-displacement converter with plurality of cavities, configured to engage with a piezoelectric element provided on energy storage means in a position in which cavities and the element are not engaged.

**Fig.6b**
[Fig.6b] Shows schematically pressure-to-displacement converter with plurality of cavities, configured to engage with a piezoelectric element provided on energy storage means in a position right after disengaging. Dotted lines represent vibrations of the element.

**Fig.7a**

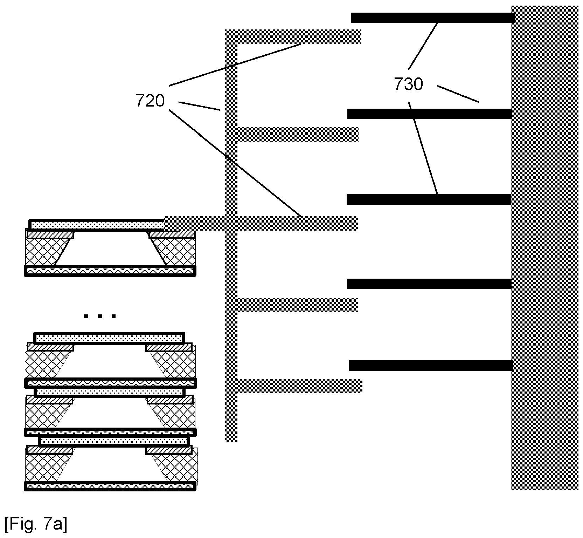

[Fig.7a] Shows schematically pressure-to-displacement converter with plurality of cavities, configured to engage with a plurality of spatially distributed piezoelectric elongated members.

**Fig.7b**

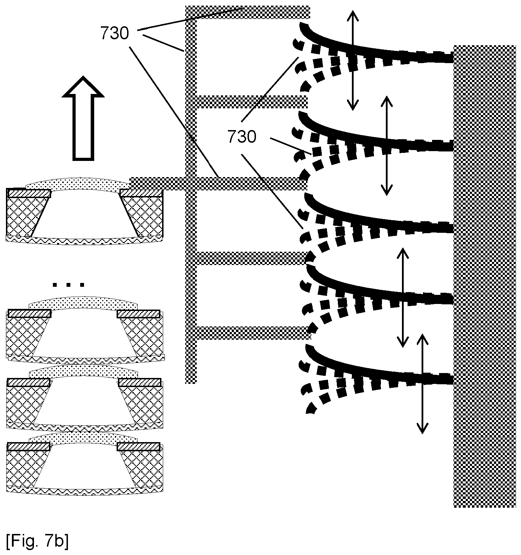

[Fig.7b] Shows schematically pressure-to-displacement converter with plurality of cavities, configured to engage with a plurality of spatially distributed piezoelectric elongated members in a position right after disengaging. Dotted lines represent vibrations of the elements and arrow show direction of vibrations.

**Fig.8**

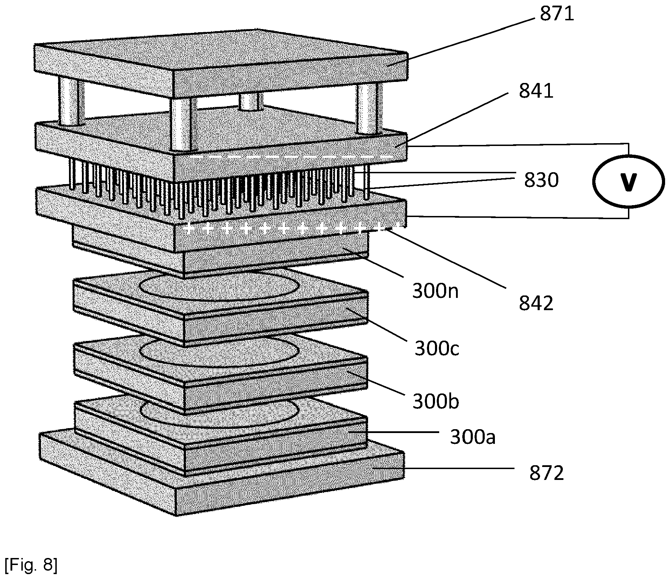

[Fig. 8] Shows schematically a three dimensional assembly view of pressure-to-displacement converters (300a to 300n) integrated with piezoelectric element (830) which are encapsulated between horizontal electrodes (841 and 842), entire harvester is mounted upon immobile bases (871 and 872).

**Description of Embodiments**

Although mean value of daily pressure is quite unpredictable as shown in [Fig 1a] one can relay that everyday a variation of pressure of at least few tens of Pa is going to be observed. Fig 1b represents only data of Warsaw which are even more promising, however the inventors have examined multiple locations all over the world to get reasonable grasp of daily pressure variation amplitude. Energy generation module according to the invention takes benefit of this observation.

**Examples**

An energy generation module according to embodiment of the invention, comprises a pressure transducer with at least one pressure to displacement converter 300 having a cavity 310 confined with a membrane 303 susceptible to deformation under pressure difference between fluid inside and outside the cavity as shown in Fig. 2.

If pressure inside cavity 310 is higher than ambient pressure, then the membrane 303 is pressed outwards forming convex part 303a. If the pressure inside cavity 310 is lower than ambient pressure, then membrane 303 is pressed inwards the cavity forming concave shape 303b. Accordingly daily variations of pressure translate to movement of the membrane 303. Energy of movement can be estimated with formula:

$$W = A \int_0^{L_0 \cdot \frac{\Delta P}{P_0 + \Delta P}} \frac{P_0}{1 - \frac{x}{L_0}} dx = P_0 V_0 \ln(1 + \frac{\Delta P}{P_0})$$

Where $V_0$ represents volume of the cavity 310, $\Delta P$ represents change of pressure, $P_0$ represent value of pressure before change. Depending on the size the pressure to displacement converter 300 can provide from a few to few hundreds of $\mu$J per day. This can be significantly improved when cavity is filed with a substance susceptible to phase change during daily pressure/temperature variations, such as e.g. chloroethane.

The pressure to displacement converter 300 can be manufactured in well-known and optimized measurement process, from layered wafer comprising substrate layer 301, box layer 302 and SOI layer forming membrane 303. The substrate layer 303 and box layer 302 are subjected to etching to form cavity 310 which is thereafter closed with cap 304. It is a very convenient technology applicable for mass production. Especially for smaller units thanks to the proposed technology being compatible with the CMOS Silicon technology, we can consider a huge number of small modules having cylindrical shape and membrane greater than $10\mu$m working in parallel. The formula given above shows that if the cumulative volume $V_0$ of the cavities is in the order of $1cm^3$, the daily production provides sufficient amount of energy for the most efficient IoT application devices.

Prior to closing with cap 304 the cavity is filed with fluid under pressure corresponding to expected daily average. Additionally, the fluid may comprise substance susceptible to phase change in expected variations of pressure and/or air temperature. An example of such fluid is chloroethane ($C_2H_5Cl$). It is also possible to use other substances that evaporate in conditions close to normal - good results were obtained acetone, isopropanol, ethanol.

Although membrane made of SOI makes the device very convenient for mass production other materials for membranes can also be used. A silicon rubber (Granta Design Limited. Properties of Silicone Rubber, AZo Materials; Granta Design: Cambridge, UK, 2001.) is a material that shows very advantageous properties.

Mechanical energy from the pressure to displacement converter 300 can be converted to electrical energy thanks to piezoelectric effect by piezoelectric element 630 mechanically coupled with pressure to displacement converter with coupling element 620. Changes of daily pressure are very slow therefore it is necessary to provide energy storage means. Sole displacement caused by membrane is too slow. Therefore, mechanical energy needs to be stored in energy storage means and then discharged in faster manner.

Energy storage means can be embedded in the piezoelectric element. A use of elongated and resilient piezoelectric element 630 engaging with coupling element 620 causes gradual bending of the resilient element during motion of coupling element displaced by pressure to displacement converter 300n. Once displacement exceeds certain value coupling element 620 disengages piezoelectric element 630 and energy principles in structural mechanics is discharged in oscillation movement thereof causing transformation of said energy to electrical energy due to piezoelectric properties of the piezoelectric element, as shown schematically in [Fig 6a] and [Fig. 6b].

Electrical energy can be delivered to energy storage means such as capacitor (not shown in figures).

The membrane closing cavity 310 is selected so that the pressure difference corresponds to range of daily atmospheric pressure changes, piezoelectric element is coupled with a mechanical energy storage means being elastic and therefore being adapted to store mechanical energy - accumulating mechanical energy of move of the membrane resulting from daily pressure changes. Value of pressure inside the cavity 310 determines reference level for pressure changes. Daily operation can be guaranteed if module is configured so that energy is released when pressure change since previous release exceeds predetermined value falling within a range (30 Pa, 80 Pa).

Although the invention can be implemented with just one pressure-to-displacement converter it is more convenient with 5-10 pressure to displacement converters 300a, 300b, 300c, 300n stacked one on another as shown schematically in [Fig. 5], [Fig. 6a] and [Fig. 6b] it is easier to provide sufficient displacement. Alternatively filing the cavities of converters with different pressures and/or using different membranes for different sensitivity to pressure change enable covering larger variety of conditions. It is also possible to connect the pressure to displacement converters in parallel.

It is a further improvement to use a piezoelectric element 630 that comprises a plurality of spatially distributed piezoelectric elongated members adapted to store mechanical energy engageable with at the least one pressure to displacement converter as shown schematically in Fig. 7a, 7b.

There are multiple methods of implementing piezoelectric element and plurality of piezoelectric elongated members adapted to store mechanical energy. Successful tests were made with a plurality of piezoelectric elongated members realized as scuts of PZT or structures of ZnO nanorods. Use of PZT allows obtaining highest voltages while keeping ability to store mechanical energy. ZnO nanorods on the other hand are very convenient for mass production and still have reasonable mechanical and electrical properties. Person skilled in the art would be able to suggest a number of possible realization of elongated piezoelectric structures being resilient enough to provide mechanical energy storage sufficient for this application.

It is also possible to use piezoelectric elongated members devoid of resilient properties. It requires engagement by pressing instead of bending. This approach allows forest-like structures which are convenient to grow. Example of such structure is shown in [Fig. 8] which illustrates schematically a structure, having two horizontal electrodes 841, 842 interconnected with plurality of nano-rods 830 forming a forest like structure between the horizontal electrodes 841, 842. Nanorodes 830 are made of a piezoelectric material, e.g. ZnO. The bottom metallic plate rests on a plurality of pressure-to-displacement converters 300a, 300b, 300c, 300n discussed above. Using plurality of pressure-to-displacement converter make it easier to obtain sufficient displacement, but in principle it is possible to use even one. The bottom of the pressure-to-displacement converter is fixed to an immobile base 872 . The upper metallic plate is fixed to apposite immobile base 871.

When the pressure-to-displacement converters 300a, 300b, 300c, 300n react to a change in ambient pressure with vertical displacement, nonorods 830 are compressed (when the pressure-to-displacement converters expand), or stretched (when the pressure-to-displacement converters shrink). Thanks to the piezoelectric properties of the rods, there appears an uncompensated electrical field in the rods that attracts or repulses electrons, thus producing electrical pulses in the circuit relaying the electrodes 841 1nd 842. The voltage pulses occuring in-between the electrodes 841, 842, are rectified, and the electrical energy is stored in a capacitor (not shown in figure). As the nanorods 830 are substantially identical they tend to discharge the pulses in the same time. Thanks to the synchronized action of a multitude of nanorods 830, the portions of energy produced by nanorods 830 are adding cumulatively.

To reduce power consumption, it is possible to turn IoT device powered with module only when sufficient amount of energy is accumulated in electrical energy storage means. It requires only additional analog triggering device. This provides a synergistic effect as pace of gathering energy is synchronized with daily fluctuations of pressor and hence parameters of the energy generation module or a number of modules can be adapted to generate specific amount of energy in predictable time. It is significant advantage over energy generation devices based on solar or wind energy.

**Industrial Applicability**

The invention is suitable for powering devices with extremely low power consumption. Specifically, it is applicable in internet of things sensory devices used for infrequent transmission of sensor data. Devices with the energy generation module according to the invention can be easily deposited or even dropped down from airplane and remain operable without additional sources of power - only daily fluctuation of ambient pressure.

**Citation List**

**Patent Literature**

PTL1: WO2002084754
PTL2: JP2009165931 PTL3: US2008136562 and PTL4: EP3633844.

**Non Patent Literature**

NPL1: Safaei, M. et al. "A review of energy harvesting using piezoelectric materials: state-of-the-art a decade later (2008-2018)." Smart Materials and Structures 28 (2019): 113001
NPL2: Gibran Ali, John Wagner, David Moline, Todd Schweisinger, Energy harvesting from atmospheric variations - Theory and test, Renewable Energy, Volume 74, 2015, Pages 528-535, ISSN 0960-1481, https://doi.org/10.1016/j. renene.2014.08.033.

**Claims**

1. An energy generation module, comprising

   a pressure transducer with at least one pressure-to-displacement converter (300) having a cavity (310) confined with a membrane (303) susceptible to deformation under a pressure difference between fluid inside and outside the cavity (310), and at least one piezoelectric element mechanically coupled with the
   at least one pressure-to-displacement converter (300) for converting energy resulting from a movement caused by deformation of the membrane (303) to electrical energy,
   **characterized in that**

   the cavity (310) closed with the membrane (303) is airtight, and
   the membrane (303) is selected so that the pressure difference corresponds to a range of daily atmospheric pressure changes,
   the at least one piezoelectric element comprises a plurality of spatially distributed piezoelectric elongated members (730, 830) engageable with the at least one pressure-to-displacement converter (300, 300a, 300b, 300c, 300n) so that an energy is released when pressure change since a previous release exceeds a predetermined value falling within a range of 30 Pa to 80 Pa.

2. An energy generation module according to claim 1, wherein the cavity (310) is realized in SOI technology.

3. An energy generation module according to claim 1 or 2, wherein the membrane (303) has a size of at least 10$\mu$m.

4. An energy generation module according to claim 1 or 2 or 3, wherein the cavity (310) is axially symmetrical.

5. An energy generation module according to claim 1 or 2 or 3, wherein the piezoelectric elongated members (730) are adapted to store mechanical energy, while being bent by the pressure-to-displacement converter and releasing it when being disengaged.

6. An energy generation module according to claim 5, wherein the plurality of spatially distributed piezoelectric elongated members (730) comprises a plurality of substantially parallel scuts of PZT.

7. An energy generation module according to claim 5, wherein the plurality of spatially distributed piezoelectric elongated members (730) comprises a structure of ZnO nanorods.

8. An energy generation module according to claim 5, wherein the plurality of spatially distributed piezoelectric elongated members (730) comprises a silicon comb with ZnO layer.

9. An energy generation module according to any of claims 1-4, wherein the energy generation module has a first electrode (841) and a second electrode (842) which are parallel to each other and the plurality of spatially distributed piezoelectric elongated members comprise nano-rods (830) forming a forest like structure encompassed between the first electrode (841) and the second electrode (842), wherein the first electrode (841) is fixed and the second electrode is coupled with the pressure-to-displacement converter for engaging the nano-rods (830).

10. An energy generation module according to any of claims 1-7, wherein the cavity is filed with a fluid comprising a substance subjected to phase transition during operation of the module.

11. An energy generation module according to claim 8, wherein said substance is a substance selected from a group including chloroethane, acetone, isopropanol and ethanol or a mixture thereof.

12. An energy generation module according to any of claims 1-10, further including electrical energy storage means comprising a low leak capacitor.

13. An energy generation module according to any of the preceding claims, comprising plural pressure to displacement converters stacked one on another.

14. An energy generation module according to claim 13, wherein the pressure to displacement converters have cavities filed with fluid under different pressures.

15. A method of ambient energy harvesting comprising conversion of mechanical energy to electrical energy with at least one piezoelectric element, **characterized in that** energy is harvested in daily doses of atmospheric pressure variations with at least one energy generation module as defined in claim 1.


**Patentansprüche**

1. Energieerzeugungsmodul, umfassend einen Druckaufnehmer mit mindestens einem Druck-Verdrängungswandler (300), der einen Hohlraum (310) aufweist, der durch eine Membran (303) begrenzt ist, die unter einer Druckdifferenz zwischen einem Fluid innerhalb und außerhalb des Hohlraums (310) verformungsempfindlich ist, und mindestens ein piezoelektrisches Element, das mechanisch mit dem mindestens einen Druck-Verdrängungswandler (300) gekoppelt ist, um Energie, die aus einer durch Verformung der Membran (303) verursachten Bewegung resultiert, in elektrische Energie umzuwandeln,

   **dadurch gekennzeichnet, dass** der durch die Membran (303) verschlossene Hohlraum (310) luftdicht ist und die Membran (303) so ausgewählt ist, dass die Druckdifferenz einem Bereich täglicher atmosphärischer Druckänderungen entspricht,
   wobei das mindestens eine piezoelektrische Element eine Vielzahl von räumlich verteilten, piezoelektrischen, länglichen Gliedern (730, 830) umfasst, die mit dem mindestens einen Druck-Verdrängungswandler (300, 300a, 300b, 300c, 300n) in Eingriff gebracht werden können, sodass eine Energie freigesetzt wird, wenn die Druckänderung seit einer vorherigen Freisetzung einen vorbestimmten Wert überschreitet, der in einen Bereich von 30 Pa bis 80 Pa fällt.

2. Energieerzeugungsmodul nach Anspruch 1, wobei der Hohlraum (310) in SOI-Technologie ausgebildet ist.

3. Energieerzeugungsmodul nach Anspruch 1 oder 2, wobei die Membran (303) eine Größe von mindestens 10 $\mu$m aufweist.

4. Energieerzeugungsmodul nach Anspruch 1 oder 2 oder 3, wobei der Hohlraum (310) axialsymmetrisch ist.

5. Energieerzeugungsmodul nach Anspruch 1 oder 2 oder 3, wobei die piezoelektrischen, länglichen Glieder (730) ausgelegt sind, um mechanische Energie zu speichern, während sie durch den Druck-Verdrängungswandler gebogen werden, und sie freizugeben, wenn sie außer Eingriff gebracht werden.

6. Energieerzeugungsmodul nach Anspruch 5, wobei die Vielzahl von räumlich verteilten, piezoelektrischen, länglichen Gliedern (730) eine Vielzahl von im Wesentlichen parallelen Schnitten aus PZT umfasst.

7. Energieerzeugungsmodul nach Anspruch 5, wobei die Vielzahl von räumlich verteilten, piezoelektrischen, länglichen Gliedern (730) eine Struktur aus ZnO-Nanostäbchen umfasst.

8. Energieerzeugungsmodul nach Anspruch 5, wobei die Vielzahl von räumlich verteilten, piezoelektrischen, länglichen Gliedern (730) einen Siliziumkamm mit einer ZnO-Schicht umfasst.

9. Energieerzeugungsmodul nach irgendeinem der Ansprüche 1-4, wobei das Energieerzeugungsmodul eine erste Elektrode (841) und eine zweite Elektrode (842) aufweist, die parallel zueinander sind, und die Vielzahl von räumlich verteilten, piezoelektrischen, länglichen Gliedern Nanostäbchen (830) umfasst, die eine waldartige Struktur bilden, die zwischen der ersten Elektrode (841) und der zweiten Elektrode (842) eingeschlossen ist, wobei die erste Elektrode (841) fixiert ist und die zweite Elektrode mit dem Druck-Verdrängungswandler zum Eingriff mit den Nanostäbchen (830) gekoppelt ist.

10. Energieerzeugungsmodul nach irgendeinem der Ansprüche 1-7, wobei der Hohlraum mit einem Fluid gefüllt ist, das eine Substanz umfasst, die während des Betriebs des Moduls einem Phasenübergang unterliegt.

11. Energieerzeugungsmodul nach Anspruch 8, wobei die Substanz eine Substanz ist, die aus einer Gruppe ausgewählt ist, die Chlorethan, Aceton, Isopropanol und Ethanol oder ein Gemisch davon einschließt.

12. Energieerzeugungsmodul nach irgendeinem der Ansprüche 1-10,
ferner einschließend elektrische Energiespeichermittel, die einen Kondensator mit geringem Leckstrom umfassen.

13. Energieerzeugungsmodul nach irgendeinem der vorhergehenden Ansprüche, umfassend mehrere übereinander gestapelte Druck-Verdrängungswandler.

14. Energieerzeugungsmodul nach Anspruch 13, wobei die Druck-Verdrängungswandler Hohlräume aufweisen, die mit Fluid unter unterschiedlichen Drücken gefüllt sind.

15. Verfahren zum Sammeln von Umgebungsenergie, umfassend die Umwandlung von mechanischer Energie in elektrische Energie mit mindestens einem piezoelektrischen Element, **dadurch gekennzeichnet, dass** die Energie in täglichen Dosen von atmosphärischen Druckschwankungen mit mindestens einem Energieerzeugungsmodul nach Anspruch 1 gesammelt wird.


**Revendications**

1. Un module de production d'énergie, comprenant un capteur de pression avec au moins un convertisseur pression-déplacement (300) comportant une cavité (310) confinée par une membrane (303) susceptible de se déformer sous l'effet d'une différence de pression entre le fluide à l'intérieur et à l'extérieur de la cavité (310), et au moins un élément piézoélectrique couplé mécaniquement à l'au moins un convertisseur pression-déplacement (300) pour convertir l'énergie résultant d'un mouvement causé par la déformation de la membrane (303) en énergie électrique,

   **caractérisé en ce que** la cavité (310) fermée par la membrane (303) est étanche à l'air, et la membrane (303) est choisie de manière à ce que la différence de pression corresponde à une gamme de variations quotidiennes de la pression atmosphérique,
   l'au moins un élément piézoélectrique comprend une pluralité de membres allongés piézoélectriques (730, 830) répartis spatialement qui peuvent être engagés avec l'au moins un convertisseur pression-déplacement (300, 300a, 300b, 300c, 300n) de sorte qu'une énergie est libérée lorsque la variation de pression depuis une libération précédente dépasse une valeur prédéterminée comprise entre 30 Pa et 80 Pa.

2. Un module de production d'énergie selon la revendication 1, dans lequel la cavité (310) est réalisée en technologie SOI.

3. Un module de production d'énergie selon la revendication 1 ou 2, dans lequel la membrane (303) a une taille d'au moins 10 $\mu$m.

4. Un module de production d'énergie selon la revendication 1 ou 2, ou 3, dans lequel la cavité (310) est axialement symétrique.

5. Un module de production d'énergie selon la revendication 1 ou 2, ou 3, dans lequel les membres allongés piézoélectriques (730) sont adaptés pour stocker de l'énergie mécanique, tout en étant pliés par le convertisseur pression-déplacement et en la libérant lorsqu'ils sont désengagés.

6. Un module de production d'énergie selon la revendication 5, dans lequel la pluralité de membres allongés piézoélectriques (730) répartis spatialement comprend une pluralité de coupes de PZT sensiblement parallèles.

7. Un module de production d'énergie selon la revendication 5, dans lequel la pluralité de membres allongés piézoélectriques (730) répartis spatialement comprend une structure de nanotiges de ZnO.

8. Un module de production d'énergie selon la revendication 5, dans lequel la pluralité de membres allongés piézoélectriques (730) répartis spatialement comprend un peigne en silicone avec une couche de ZnO.

**9.** Un module de production d'énergie selon l'une quelconque des revendications 1 à 4, dans lequel le module de production d'énergie a une première électrode (841) et une seconde électrode (842) qui sont parallèles l'une à l'autre et la pluralité de membres allongés piézoélectriques répartis spatialement comprend des nanotiges (830) formant une structure de type forêt englobée entre la première électrode (841) et la seconde électrode (842), dans lequel la première électrode (841) est fixe et la seconde électrode est couplée au convertisseur pression-déplacement pour engager les nanotiges (830).

**10.** Un module de production d'énergie selon l'une des revendications 1 à 7, dans lequel la cavité est remplie d'un fluide comprenant une substance soumise à une transition de phase pendant le fonctionnement du module.

**11.** Un module de production d'énergie selon la revendication 8, dans lequel ladite substance est une substance choisie dans un groupe comprenant le chloroéthane, l'acétone, l'isopropanol et l'éthanol ou un mélange de ceux-ci.

**12.** Un module de production d'énergie selon l'une quelconque des revendications 1 à 10, comprenant en outre des moyens de stockage d'énergie électrique comprenant un condensateur à faible fuite.

**13.** Un module de production d'énergie selon l'une quelconque des revendications précédentes, comprenant plusieurs convertisseurs pression-déplacement empilés l'un sur l'autre.

**14.** Un module de production d'énergie selon la revendication 13, dans lequel les convertisseurs pression-déplacement ont des cavités remplies de fluide sous différentes pressions.

**15.** Un procédé de collecte d'énergie ambiante comprenant la conversion de l'énergie mécanique en énergie électrique à l'aide d'au moins un élément piézoélectrique, **caractérisé en ce que** l'énergie est récoltée en doses quotidiennes de variations de pression atmosphérique à l'aide d'au moins un module de production d'énergie tel que défini dans la revendication 1.

[Fig. 1a] (STATE OF THE ART)

[Fig. 1b] (STATE OF THE ART)

303
302
301
304

310

— 300

[Fig. 2]

303a
303
302
301
304

310

— 300

[Fig. 3]

303b
303
302
301
304

310

— 300

[Fig. 4]

300n

300c

300b

300a

N

[Fig. 5]

[Fig. 6a]

[Fig. 6b]

720

730

[Fig. 7a]

[Fig. 7b]

871

841

830

842

300n

300c

300b

300a

872

V

[Fig. 8]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2002084754 A
- JP 2009165931 B
- US 20080136562 A1
- EP 3633844 A1
- US 2008136562 A
- EP 3633844 A

### Non-patent literature cited in the description

- **SAFAEI, M et al.** A review of energy harvesting using piezoelectric materials: state-of-the-art a decade later (2008-2018).. *Smart Materials and Structures*, 2019, vol. 28, 113001
- **GIBRAN AL** ; **JOHN WAGNER** ; **DAVID MOLINE** ; **TODD SCHWEISINGER**. Energy harvesting from atmospheric variations. *Theory and test, Renewable Energy*, 2015, vol. 74, ISSN 0960-1481, 528-535, https://doi.org/10.1016/j.renene.2014.08.033
- **BLANCQ, FRANK**. Diurnal pressure variation: The atmospheric tide. *Weather*, 2011, vol. 66, ISSN 1477-8696, 306-307, https://doi.org/10.1002/-wea.857
- **MACIEJ HARAS** ; **THOMAS SKOTNICKI**. Thermo-electricity for IoT - A review. *Nano Energy*, 2018, vol. 54, ISSN 2211-2855, 461-476, https://doi.org/10.1016/j.nanoen.2018.10.013
- **SAFAEI, M. et al.** A review of energy harvesting using piezoelectric materials: state-of-the-art a decade later (2008-2018).. *Smart Materials and Structures*, 2019, vol. 28, 113001
- **GIBRAN ALI** ; **JOHN WAGNER** ; **DAVID MOLINE** ; **TODD SCHWEISINGER**. Energy harvesting from atmospheric variations - Theory and test. *Renewable Energy*, 2015, vol. 74, ISSN 0960-1481, 528-535, https://doi.org/10.1016/j.renene.2014.08.033